# EUROPEAN PATENT SPECIFICATION

(11) **EP 0 734 892 B1**
(45) Date of publication and mention of the grant of the patent: **05.12.2001**
(21) Application number: 96200699.5
(22) Date of filing: 14.03.1996
(51) Int. Cl.: B60H 1/32, B60K 11/04

(54) **Cooling structure for construction machine**
Kühlsystem für Baumaschinen
Système de refroidissement pour machine de construction

(30) Priority: 31.03.1995 JP 7606295
(43) Date of publication of application: 02.10.1996
(73) Proprietor: Fiat-Hitachi Excavators S.p.A., 10099 San Mauro Torinese (Torino) (IT)
(72) Inventor: Akira, Tatsumi, Tokyo (JP); Duri, Gianni, 40027 Mordano, Bologna (IT); Prealta, Dario, 10093 Collegno, Torino (IT)
(74) Representative: Vandenbroucke, Alberic

(56) References cited:
- EP-A- 0 236 216
- EP-A- 0 417 500
- US-A- 4 938 303
- PATENT ABSTRACTS OF JAPAN vol. 009, no. 219 (M-410), 6 September 1985 & JP 60 078827 A (MAZDA KK), 4 May 1985,

## Description

The present invention relates to a cooling structure for construction machines such as hydraulically operated excavators, and more particularly to a cooling structure for construction machines wherein ambient air is sucked in by a rotatable fan in order to cool a condenser, an oil cooler and a radiator, and cooling air, after being used for the cooling, is discharged through an engine cover at the top of an engine compartment.

In construction machines such as hydraulically operated excavators, a machine compartment normally comprises an engine, a fan attached to the engine, an oil cooler and a radiator. The radiator and the oil cooler are usually arranged vertically parallel to each other. Ambient air sucked in by the fan for cooling the engine first cools the oil cooler and the radiator, sequentially in this order, and is then forced to the rear side of the engine through a passage between an upper surface of the engine and an engine cover for cooling the machine compartment, more in particular the engine compartment as primary part of the machine compartment. After being used for the cooling purposes, the hot air is discharged to the environment through exhaust ports formed in an upper wall of the engine cover and through a door of a pump compartment forming part of the machine compartment.

When an air conditioning system is mounted in the construction machine, a condenser for the air conditioning is also mounted in the machine compartment in a manner such that the three components, i.e., the radiator, the oil cooler and the condenser, are arranged vertically parallel to each other. In this case, the ambient air sucked in by the fan for cooling the engine also has to cool the condenser, the oil cooler and the radiator, sequentially in the above order.

It will be appreciated that as a result of the above configuration the flow resistance imposed on the drawn-in air in the machine compartment is large and there is a limit to the suction ability of the fan. Therefore, the conventional cooling structure suffers from the problem that it is difficult to achieve a sufficient cooling ability. In particular, construction machines being provided with an air conditioning system have the problem that because the three components, i.e., the radiator, the oil cooler and the condenser, are arranged vertically parallel to each other in the machine compartment, the flow resistance is increased and the cooling ability becomes insufficient.

It is therefore an object of the present invention to provide a cooling structure for a construction machine wherein a condenser of an air conditioning system is appropriately installed in a machine compartment to thereby ensure a superior cooling ability for a radiator and an oil cooler, while cooling the condenser.

According to the present invention, a cooling structure for an industrial vehicle is provided comprising a machine compartment containing an engine, an oil cooler, a radiator and a condenser of an air conditioning system, the oil cooler and the radiator extending parallel to each other, and wherein intake ports are provided in a shielding of said machine compartment through which ambient air is sucked in by a fan rotated by said engine in order to cool said condenser, said oil cooler and said radiator, and cooling air after being used for the cooling is discharged from the machine compartment.

The cooling structure is characterized in that said condenser is disposed in an inclined position relative to said oil cooler and said radiator.

First, second and third intake ports are respectively provided in a top shielding, a side shielding and a bottom shielding of the machine compartment and the condenser extends from the vicinity of a lower end of said first intake port towards a bottom end of said oil cooler.

Preferably, the above cooling structure includes exhaust ports formed in the engine cover above a front portion of the engine whereby a first guide is positioned radially outwardly of the fan for guiding the cooling air after it has passed the fan in a laminar flow to the exhaust ports. A second guide is positioned above the front portion of the engine for guiding the cooling air discharged through the exhaust ports in a laminar flow to the environment. The second guide has a distal end positioned lower than a distal end of the first guide, the exhaust ports extending between the distal ends of both said first and second guides.

In the present invention, the condenser serves as a guide plate for the ambient air entering through the first intake port, allowing it to flow downwardly towards the oil cooler. On the other hand, ambient air sucked in through the second intake port flows in part directly into the oil cooler and the radiator, while the other part flows into the condenser. The stream of air flowing into the condenser is straightened by the baffling action of tubes of the condenser, and then merges with the air entered through the first intake port. Therefore, while cooling the condenser, it is possible to smooth the air stream supplied to the oil cooler and the radiator. As a result, the flow resistance on the entry side of the fan is reduced, the intake efficiency is increased, and the cooling ability for the radiator and the oil cooler is enhanced.

With the exhaust ports and the first and second guides provided on the delivery side of the fan, most of the cooling air which has passed the fan is discharged in a laminar flow through the exhaust ports near the fan. Because the distance from the fan to the exhaust ports is short and the cooling air is discharged in a laminar flow, the flow resistance is very small. Therefore, even if the area of the exhaust ports is kept small, the exhaust efficiency is nevertheless high. Consequently, the flow resistance is reduced on both the entry and delivery sides of the fan, both the intake efficiency and the exhaust efficiency are increased, and the cooling efficiency for the radiator and the oil cooler can be further improved.

A cooling structure in accordance with the present invention will now be described in greater detail, by way of example, with reference to the accompanying drawings, in which :
Figure 1 is a vertical sectional view of a machine compartment of a hydraulic excavator with a cooling structure according to a first embodiment of the present invention;
Figure 2 is a side view showing the interior structure of the machine compartment of Figure 1;
Figure 3 is a view showing an air conditioning system including a condenser;
Figure 4 is a vertical sectional view of a machine compartment of a hydraulic excavator having a conventional cooling structure;
Figure 5 is a vertical sectional view of a machine compartment of a hydraulic excavator with a cooling structure according to a second embodiment of the present invention; and
Figure 6 is a perspective view of a section including the machine compartment of the hydraulic excavator as shown in Figure 5.

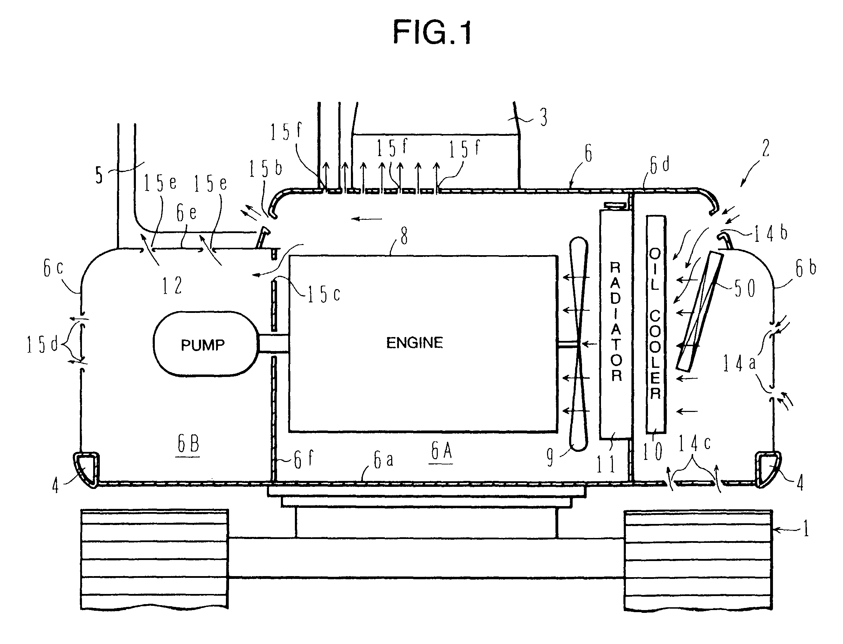

A first embodiment of the present invention will now be described with specific reference to Figures 1 to 3. In Figure 1, reference numeral 1 denotes an undercarriage of a hydraulically operated excavator. An upper structure 2 is rotatably mounted on the undercarriage 1 while a front attachment 3 is pivotally attached to a front portion of the upper structure 2. The upper structure 2 mainly comprises a frame 4 serving as a skeleton structure, a cab 5 installed on a front portion of the frame 4, a machine compartment 6 provided in the frame 4 rearwardly of the cab 5 and a counter weight 7 installed at the rearmost end of the frame 4.

The machine compartment 6 is constructed by a bottom panel 6a, left and right side panels 6b, 6c, an engine cover 6d, and a top panel 6e which are arranged so as to form a box-shaped structure. The machine compartment 6 interiorly is divided by a partition panel 6f into an engine compartment 6A and a pump compartment 6B. Installed in the engine compartment 6A are : an engine 8, a cooling fan 9 attached to the engine 8, a condenser 50, an oil cooler 10, a radiator 11 and a muffler (not shown) for discharging engine combustion gasses. A hydraulic pump 12, driven by the engine 8 and operable to pressurize a hydraulic system, is installed in the pump compartment 6B. An air cleaner (not shown) for filtering the engine combustion air is also provided in the same compartment.

Intake ports 14a, 14b are formed respectively in the side panel 6b defining the engine compartment 6A of the machine compartment 6 and a side wall of the engine cover 6d. Further intake ports 14c are formed in the bottom panel 6a. Exhaust ports 15f, 15b are formed in the engine cover 6d while other exhaust ports 15d, 15e are formed respectively in the side panel 6c defining the pump compartment 6B and the top panel 6e. Apertures 15c are formed in the partition panel 6f. During operation, ambient air sucked in by the fan 9 through the intake ports 14a, 14b and 14c successively cools the condenser 50, the oil cooler 10 and the radiator 11, whereafter it is discharged to the environment through the exhaust ports 15f, 15b, 15d and 15e.

In accordance with the principles of the present invention, the oil cooler 10 is erected parallel to the radiator 11, while the condenser 50 is inclined so as to extend from a region near a lower end of the uppermost intake port 14b formed in the side wall of the engine cover 6d to a position near a lower end of the oil cooler 10.

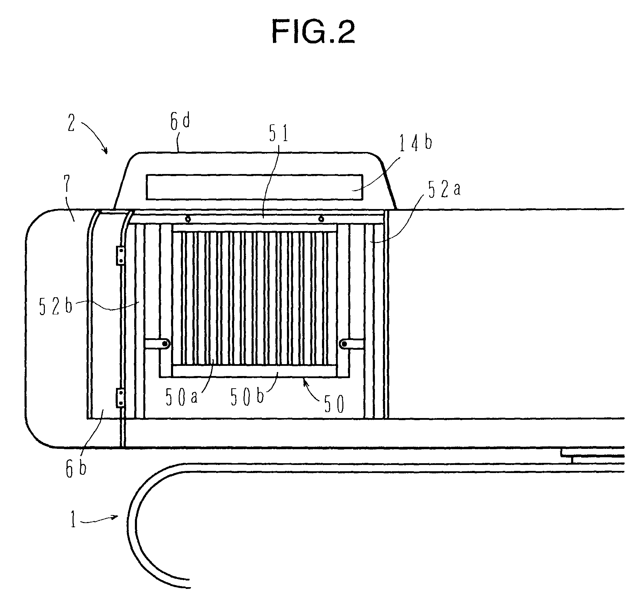

The side panel 6b is constructed as a hingeable door and Figure 2 gives an impression of the interior structure of the machine compartment 6 when the door is opened. The condenser 50 is composed of a number of vertical tubes 50a through which a coolant liquid flows, the tubes 50a being supported by a frame 50b. The frame 50b is fixed by means of bolts or the like to a horizontal frame 51 and vertical frames 52a, 52b which are in turn fixedly attached at a proper location within the engine compartment 6A.

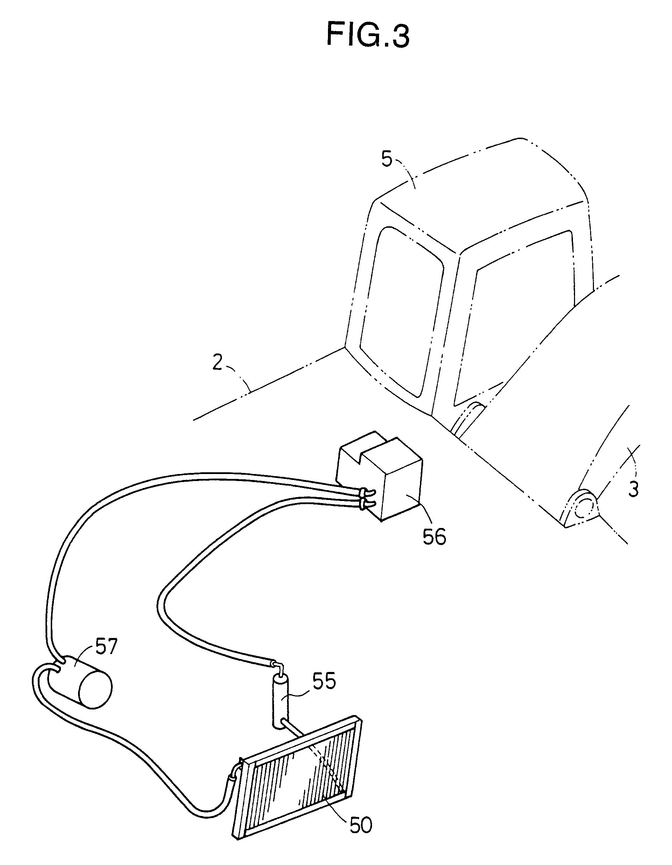

As will be clear to a person skilled in the art, the condenser 50 is a component of an air conditioning system. The air conditioning system comprises, as shown in Figure 3, the condenser 50, a liquid containing tank 55, an expansion valve and an evaporator (both not shown) installed in an air conditioning unit 56, and a compressor 57 which are interconnected by tubes. The air conditioning unit 56 is installed in the cab 5 and air is supplied to the evaporator by a fan (not shown) in order to blow conditioned air into the cab 5.

The above described embodiment operates as follows. As explained above, the ambient air sucked in by the fan 9 through the intake ports 14a, 14b and 14c successively cools the condenser 50, the oil cooler 10 and the radiator 11, whereafter it is discharged to the environment through the exhaust ports 15f, 15b, 15d and 15e. Since the condenser 50 is disposed with an inclined orientation as mentioned above, it serves as a guide plate for the ambient air entering the machine compartment 6 through the uppermost intake port 14b, enhancing the downward flow of said air. A major part of the air entering through the intake port 14b directly flows into the oil cooler 10 and the radiator 11, while the other part flows along the inner surface of the condenser 50. Said other part of air is straightened by the baffling action of the tubes 50a of the condenser 50 before it merges with the air directly entering the oil cooler 10.

Also as a result of the baffling action, the air entering through the uppermost intake port 14b on the one hand and through the lower intake ports 14a and 14c on the other hand will not directly interfere with one other. More specifically, air aspirated through the intake port 14b flows smoothly downwardly along the condenser 50 and then flows into the oil cooler 10 and the radiator 11 while partially cooling the condenser 50. A part of the air entering through the intake ports 14a passes through the condenser 50 while cooling it, and then merges with the air entered through the intake port 14b before reaching the oil cooler 10 and the radiator 11. As such, it is possible not only to cool the condenser 50, but also to smooth the air flow supplied to the oil cooler 10 and the radiator 11, thereby reducing the flow resistance on the entry side of the fan 9, increasing the intake efficiency through the intake ports, and enhancing the cooling ability of the radiator 11 and the oil cooler 10.

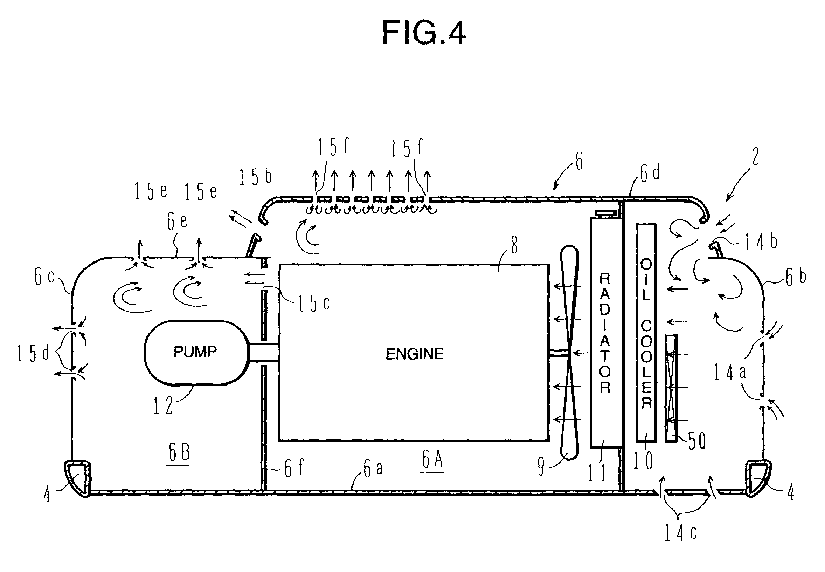

For ease of comparison, a conventional cooling structure is shown in Figure 4. It is a common practice to arrange the radiator 11 and the oil cooler 10 vertically parallel to each other and, in addition, also the condenser 50 is positioned parallel to those components. In such a conventional cooling structure, the ambient air aspirated through the uppermost intake port 14b collides with the air entering through the intake ports 14a, whereby the flow of air becomes disturbed as shown. Furthermore, because the condenser 50 is installed parallel to the oil cooler 10, it acts as a flow resisting member for the air entering through the intake ports 14a, resulting in an increased flow resistance on the entry side of the fan 9 and a reduced intake efficiency. The effect of the intake ports 14c moreover is minimal with this configuration.

Results of experiments made to confirm the advantages of the improved embodiment are as follows :

A wheel type hydraulic excavator of the 15 ton class was run over a mountain path, and stabilized temperatures of the engine cooling water and the hydraulic fluid were measured. The temperatures of the engine cooling water and the hydraulic fluid were both 62 °C above the ambient air temperature for an excavator having a cooling structure with no condenser (with the condenser 50 shown in Figure 4 omitted) and 64 °C for the excavator having the conventional cooling structure as shown in Figure 4, whereas both said temperatures were only 60.5 °C above the ambient air temperature for the excavator having the cooling structure of the embodiment shown in Figure 1.

From the above results, it thus was confirmed that while the cooling ability was lowered 2 °C in the conventional cooling structure shown in Figure 4 compared to the cooling structure having no condenser, it was improved 1.5 °C in the cooling structure according to the present invention. In other words, the cooling ability of the improved embodiment was improved 3.5 °C when compared to the conventional cooling structure shown in Figure 4.

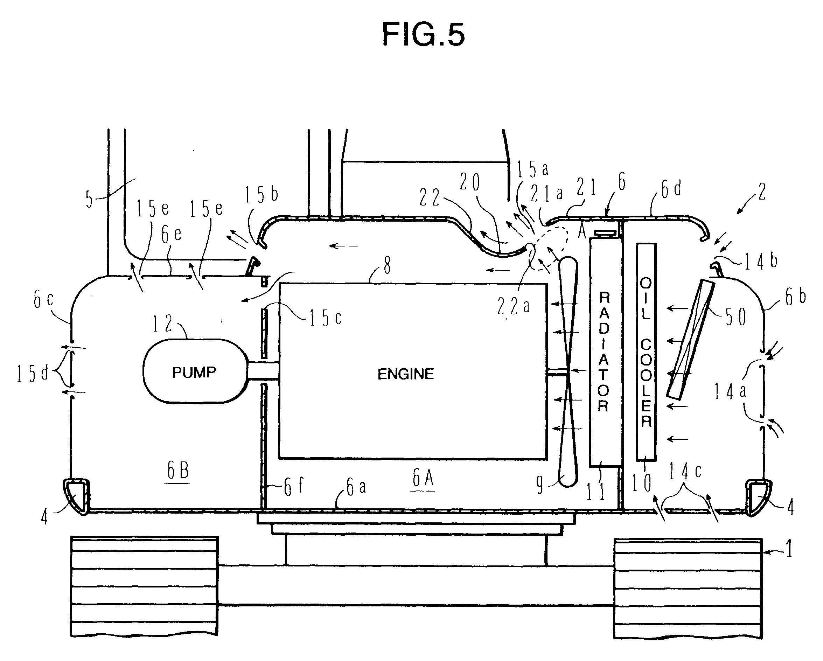

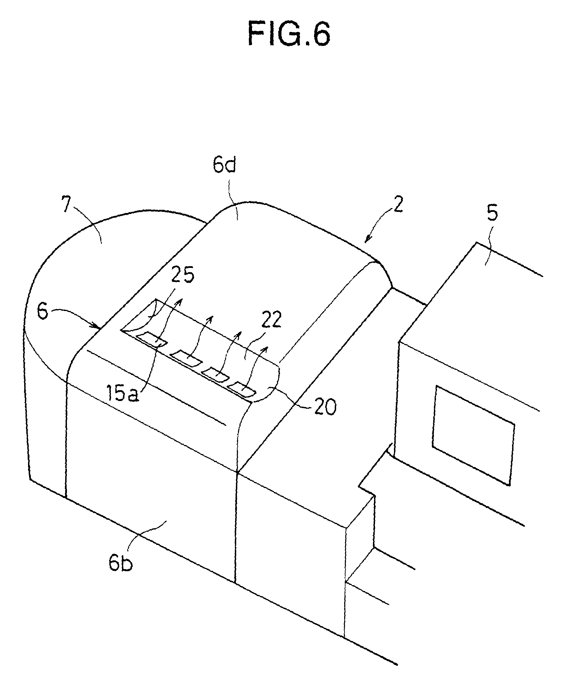

A second embodiment of the present invention will now be described with reference to Figures 5 and 6, in which components identical to those shown in Figure 1, are denoted by the same reference numerals. This embodiment is intended to improve the exhaust efficiency as well as the intake efficiency, thereby further enhancing the cooling ability.

As a structural feature of the cooling structure in accordance with this embodiment, a recess 20 is formed in an area of the engine cover 6d above a front portion of the engine 8, and the exhaust ports 15a are formed in an inclined portion of the recess 20 facing the fan 9. In positioning the exhaust ports 15a as such, a space "A" having a proper size is delimited by a portion 21 of the engine cover 6d, the exhaust ports 15a and the fan 9. The portion 21, which is positioned radially outwardly of the fan 9, functions as a first guide for guiding part of the cooling or heated air which has just passed the fan 9, in a laminar flow to the exhaust ports 15a. The exterior surface of another portion 22 of the recess 20 sloping downwardly towards the fan 9 functions as a second guide for guiding the heated air discharged through the exhaust ports 15a in a laminar flow to the environment. A distal end 22a of the second guide 22 is located at a lower level than a distal end 21a of the first guide 21, the exhaust ports 15a being defined therebetween. As such, the exhaust ports 15a extend across the space "A" through which the heated air is supplied by the fan 9 in a laminar flow.

With the exhaust ports 15a and the first and second guides 21, 22 arranged as explained above, most of the cooling air having passed the fan 9 is discharged in a laminar flow through the exhaust ports 15a near the fan 9. It will be appreciated that since the distance from the fan 9 to the exhaust ports 15a is short and the heated air is discharged in a laminar flow, the flow resistance accordingly is very small. Therefore, even if the total area of the exhaust ports 15a is kept small, the exhaust efficiency nevertheless is high and a sufficient cooling ability is obtained.

Additionally, part of the cooling air propelled by the fan 9 flows toward the rear side of the engine 8 through the passage formed between the upper surface of the engine 8 and the bottom portion of the recess 20. It is clear that this passage is reduced in size by the presence of the recess 20. Consequently, since the flow rate of the cooling air towards the rear of the engine 8 is limited appropriately by the throttling action of the recess 20, the air flow rate is moderate and the cooling air is discharged through the exhaust ports 15b, 15d and 15e without causing any turbulence. As a result, the occurrence of turbulent flow sounds is suppressed and noise pollution is reduced.

As a further sound reducing feature, shown in Figure 6, the recess 20 formed in the engine cover 6d is made open at one end in a side wall of the engine cover 6d facing the cab 5, but is terminated at the other side in the vicinity of the counterweight 7, leaving a sound shielding partition 25 between the recess 20 and the counterweight 7. This arrangement prevents noise nevertheless transmitted through the exhaust ports 15a from spreading toward the counterweight 7 which is at the rear of the vehicle body, and hence contributes to further reduce the noise transmitted to the environment.

Comparable to the first described embodiment, since the condenser 50 is arranged in an inclined posture on the entry side of the fan 9, the flow resistance on the entry side of the fan 9 is reduced and the intake efficiency is increased.

According to this embodiment, therefore, the flow resistance is reduced on both the entry and delivery sides of the fan 9, both the intake efficiency and the exhaust efficiency are increased, and the cooling efficiency for the radiator 11 and the oil cooler 10 can be further improved.
Since most of the cooling air is leaving the engine compartment 6A in a laminar flow through the exhaust ports 15a, the occurrence of turbulent air flows at the exhaust ports 15b, 15d and 15e on the rear side is also suppressed, and noise transmitted through the exhaust ports 15a is prevented from spreading in a rearward direction by the presence of the sound shielding partition 25. This results in the advantages that the occurrence of turbulent flow sounds and the spreading of noise are suppressed and sound pollution is reduced.

## Claims

1. A cooling structure for an industrial vehicle comprising a machine compartment (6) containing an engine (8), an oil cooler (10), a radiator (11) and a condenser (50) of an air conditioning system, the oil cooler (10) and the radiator (11) extending parallel to each other, and wherein intake ports (14a, 14b, 14c) are provided in a shielding (6a, 6b, 6d) of said machine compartment (6) through which ambient air is sucked in by a fan (9) rotated by said engine (8) in order to cool said condenser (50), said oil cooler (10) and said radiator (11), and
**characterized in that** said condenser (50) is disposed in an inclined position relative to said oil cooler (10) and said radiator (11).

2. A structure according to claim 1 **characterized in that** said oil cooler (10) and said radiator (11) are positioned inbetween said condenser (50) and said fan (9).

3. A structure according to claim 1 or 2 **characterized in that** first (14b), second (14a) and third (14c) intake ports are respectively provided in a top shielding (6d), a side shielding (6b) and a bottom shielding (6a) of the machine compartment (6).

4. A structure according to claim 3 **characterized in that** the condenser (50) extends from the vicinity of a lower end of said first intake port (14b) towards a bottom end of said oil cooler (10).

5. A structure according to claim 3 or 4 **characterized in that** the first intake port (14b) is separated from the second intake ports (14a) by the condenser (50).

6. A structure according to claim 3 or any claim appended thereto **characterized in that** the condenser (50) serves as a guiding means for the ambient air entering through the first intake port (14b).

7. A structure according to claim 3 or any claim appended thereto **characterized in that** part of the air entering through the second intake ports (14a) bypasses the condenser (50).

8. A structure according to claim 3 or any claim appended thereto **characterized in that** all air entering through the third intake ports (14c) bypasses the condenser (50).

9. A structure according to claim 3 or any claim appended thereto **characterized in that** the condenser (50) includes vertically arranged tubes (50a) through which coolant liquid is transported, the tubes (50a) having a baffling effect on as well the air entering through the first intake port (14b) as through the second intake ports (14a) whereby a smooth merging of the two air streams, before entering the oil cooler (10) and the radiator (11), is achieved.

10. A structure according to any of the preceding claims **characterized in that** said cooling structure includes exhaust ports (15a) formed in a portion of an engine cover (6d) above a front portion of said engine (8), a first guide (21) positioned radially outwardly of said fan (9) for guiding the cooling air after having passed said fan (9), in a laminar flow to said exhaust ports (15a), and a second guide (22) positioned above the front portion of said engine (8) for guiding the cooling air discharged through said exhaust ports (15a) in a laminar flow to the environment, said second guide (22) having a distal end (22a) positioned at a lower level than a distal end (21a) of said first guide (21), said exhaust ports (15a) extending between both said distal ends (21a, 22a).

## Patentansprüche

1. Kühlsystem für ein gewerbliches Fahrzeug, das einen Maschinenraum (6) aufweist, der einen Motor (8), einen Ölkühler (10), einen Wasserkühler (11) und einen Kondensator (50) eines Klimatisierungssystems enthält, wobei sich der Ölkühler (10) und der Wasserkühler (11) parallel zueinander erstrecken, und wobei in einer Verkleidung (6a, 6b, 6d) des Maschinenraumes (6) Einlaßöffnungen (14a, 14b, 14c) vorgesehen sind, durch die Umgebungsluft durch ein Gebläse (9) angesaugt wird, das von dem Motor (8) in Drehung versetzt wird, um den Kondensator (50), den Ölkühler (10) und den Wasserkühler (11) zu kühlen,
**dadurch gekennzeichnet, daß** der Kondensator (50) in einer geneigten Position bezüglich des Ölkühlers (10) und des Wasserkühlers (11) angeordnet ist.

2. System nach Anspruch 1, **dadurch gekennzeichnet, daß** der Ölkühler (10) und der Wasserkühler (11) zwischen dem Kondensator (50) und dem Gebläse (9) angeordnet sind.

3. System nach Anspruch 1 oder 2, **dadurch gekennzeichnet, daß** erste (14b), zweite (14a) und dritte (14c) Einlaßöffnungen jeweils in einer oberen Verkleidung (6d), einer seitlichen Verkleidung (6b) und einer unteren Verkleidung (6a) des Maschinenraumes (6) vorgesehen sind.

4. System nach Anspruch 3, **dadurch gekennzeichnet, daß** sich der Kondensator (50) von der Nähe eines unteren Endes der ersten Einlaßöffnung (14b) in Richtung auf ein unteres Ende des Ölkühlers (10) erstreckt.

5. System nach Anspruch 3 oder 4, **dadurch gekennzeichnet, daß** die erste Einlaßöffnung (14b) von der zweiten Einlaßöffnung (14a) durch den Kondensator (50) getrennt ist.

6. System nach Anspruch 3 oder einem darauf rückbezogenen Anspruch, **dadurch gekennzeichnet, daß** der Kondensator (50) als eine Führungseinrichtung für die Umgebungsluft dient, die durch die erste Einlaßöffnung (14b) eintritt.

7. System nach Anspruch 3 oder irgendeinem darauf rückbezogenen Anspruch, **dadurch gekennzeichnet, daß** ein Teil der durch die zweiten Einlaßöffnungen (14a) eintretenden Luft den Kondensator (50) umgeht.

8. System nach Anspruch 3 oder irgendeinem hierauf zurückbezogenen Anspruch, **dadurch gekennzeichnet, daß** die gesamte durch die dritten Einlaßöffnungen (14c) eintretende Luft den Kondensator (50) umgeht.

9. System nach Anspruch 3 oder irgendeinem hierauf zurückbezogenen Anspruch, **dadurch gekennzeichnet, daß** der Kondensator (50) vertikal angeordnete Rohre (50a) einschließt, durch die hindurch ein flüssiges Kältemittel transportiert wird, daß die Rohre (50a) eine Prallplattenwirkung sowohl für die durch die erste Einlaßöffnung (19b) eintretende Luft als auch für die durch die zweiten Einlaßöffnungen (14a) eintretende Luft haben, so daß eine gleichförmige Vermengung der beiden Luftströme vor dem Eintritt in den Ölkühler (10) und den Wasserkühler (11) erzielt wird.

10. System nach einem der vorhergehenden Ansprüche, **dadurch gekennzeichnet, daß** das Kühlsystem Auslaßöffnungen (15a), die in einem Teil einer Motorverkleidung (6d) oberhalb eines vorderen Teils des Motors (8) ausgebildet sind, eine erste Führung (21), die radial außerhalb des Gebläses (9) angeordnet ist, um die Kühlluft nach dem Durchlaufen des Gebläses (9) in einer laminaren Strömung zu den Auslaßöffnungen (15a) zu führen, und eine zweite Führung (22) einschließt, die oberhalb des vorderen Teils des Motors (8) angeordnet ist, um die durch die Auslaßöffnungen (15a) abgegebene Kühlluft in einer laminaren Strömung an die Umgebung abzugeben, wobei die zweite Führung (22) ein fernliegendes Ende (22a) aufweist, das in einer niedrigeren Höhenlage angeordnet ist, als ein fernliegendes Ende (21a) der ersten Führung (21), und daß sich die Auslaßöffnungen (15a) zwischen diesen beiden fernliegenden Enden (21a, 22a) erstrecken.

## Revendications

1. Structure de refroidissement pour un véhicule industriel comprenant un compartiment (6) de machine contenant un moteur (8), un refroidisseur d'huile (10), un radiateur (11) et un condenseur (50) d'un système de climatisation, le refroidisseur d'huile (10) et le radiateur (11) s'étendant parallèlement entre eux, et dans lequel sont prévus des orifices (14a, 14b, 14c) dans un écran dudit compartiment (6) de machine au travers desquels de l'air ambiant est aspiré par un ventilateur (9) mis en rotation par ledit moteur (8) afin de refroidir ledit condenseur (50), ledit refroidisseur d'huile (10) et ledit radiateur (11) , et
**caractérisée en ce que** ledit condenseur (50) est disposé dans une position inclinée par rapport audit refroidisseur d'huile (10) et audit radiateur (11).

2. Structure selon la revendication 1, **caractérisée en ce que** ledit refroidisseur d'huile (10) et ledit radiateur (11) sont positionnés entre ledit condenseur (50) et ledit ventilateur (9).

3. Structure selon la revendication 1 ou 2, **caractérisée en ce que** des premier (14b), seconds (14a) et troisièmes (14c) orifices d'admission sont prévus respectivement dans un écran supérieur (6d), un écran latéral (6b) et un écran inférieur (6a) du compartiment de machine (6).

4. Structure selon la revendication 3, **caractérisée en ce que** le condenseur (50) s'étend depuis le voisinage d'une extrémité inférieure dudit premier orifice d'admission (14b) vers une extrémité inférieure dudit refroidisseur d'huile (10).

5. Structure selon la revendication 3 ou 4, **caractérisée en ce que** le premier orifice d'admission (14b) est séparé des seconds orifices d'admission (14a) par le condenseur (50).

6. Structure selon la revendication 3 ou une quelconque revendication s'y rapportant, **caractérisée en ce que** le condenseur (50) sert de moyen de guidage pour l'air ambiant pénétrant à travers le premier orifice d'admission (14b).

7. Structure selon la revendication 3 ou une quelconque revendication s'y rapportant, **caractérisée en ce qu'**une partie de l'air pénétrant au travers des seconds orifices d'admission (14a) contourne le condenseur (50).

8. Structure selon la revendication 3 ou une quelconque revendication s'y rapportant, **caractérisée en ce que** l'ensemble de l'air pénétrant au travers des troisièmes orifices d'admission (14c) contourne le condenseur (50).

9. Structure selon la revendication 3 ou une quelconque revendication s'y rapportant, **caractérisée en ce que** le condenseur (50) comprend des tubes disposés verticalement (50a) au travers desquels est transporté un fluide de refroidissement, les tubes (50a) possédant un effet de déflexion tant sur l'air pénétrant au travers du premier orifice d'admission (14b) que traversant les seconds orifices d'admission (14a) de sorte qu'une fusion souple des deux débits d'air est obtenue avant de pénétrer dans le refroidisseur d'huile (10) et le radiateur (11).

10. Structure selon l'une quelconque des revendications précédentes, **caractérisée en ce que** ladite structure de refroidissement comprend des orifices d'échappement (15a) constitués dans une portion d'un capot de moteur (6d) située au-dessus d'une portion avant dudit moteur (8), un premier guide (21) positionné radialement à l'extérieur dudit ventilateur (9) afin de guider l'air de refroidissement après son passage dans ledit ventilateur (9) suivant un écoulement laminaire vers lesdits orifices d'échappement (15a), et un second guide (22) positionné au-dessus de la portion avant dudit moteur (8) afin de guider l'air de refroidissement évacué au travers desdits orifices d'échappements (15a) suivant un écoulement laminaire vers l'environnement, ledit second guide (22) possédant une extrémité distale (22a) positionnée à un niveau inférieur par rapport à une extrémité distale (21a) dudit premier guide (21), lesdits orifices d'échappement (15a) s'étendant entre les deux dites extrémités distales (21a, 22a).
